# EUROPÄISCHE PATENTSCHRIFT

(11) **EP 3 224 264 B1**
(45) Veröffentlichungstag und Bekanntmachung des Hinweises auf die Patenterteilung: **24.10.2018**
(21) Anmeldenummer: 15798426.1
(22) Anmeldetag: 23.11.2015
(51) Int. Cl.: C07F 7/18, C08G 18/48, C08G 18/10

(54) **SILANGRUPPEN-HALTIGES POLYMER**
POLYMER CONTAINING SILANE GROUPS
POLYMÈRE CONTENANT DES GROUPES DE SILANES

(30) Priorität: 24.11.2014 EP 14194594
(43) Veröffentlichungstag der Anmeldung: 04.10.2017
(73) Patentinhaber: Sika Technology AG, 6340 Baar (CH)
(72) Erfinder: KRAMER, Andreas, CH-8006 Zürich (CH); BURCKHARDT, Urs, CH-8049 Zürich (CH)
(74) Vertreter: Sika Patent Attorneys
(86) Internationale Anmeldenummer: PCT/EP2015/077374
(87) Internationale Veröffentlichungsnummer: WO 2016/083310

(56) Entgegenhaltungen:
- WO-A2-2013/174891
- US-A1- 2008 221 238

## Beschreibung

### Technisches Gebiet

Die Erfindung betrifft Silangruppen-haltige Polymere und ihre Verwendung in härtbaren Zusammensetzungen, welche insbesondere zum Verkleben, Abdichten oder Beschichten von Bau- und Industrieprodukten einsetzbar sind.

### Stand der Technik

Silangruppen-haltige Polymere, auch als "silanfunktionelle Polymere" oder "silanmodifizierte Polymere" (SMP) oder "silanterminierte Polymere" (STP) bezeichnet, werden seit einiger Zeit erfolgreich als Bindemittel in feuchtigkeitshärtenden Zusammensetzungen eingesetzt, die insbesondere als elastische Klebstoffe, Dichtstoffe oder Beschichtungen in der Bau- und Fertigungsindustrie Verwendung finden.

Ein einfach durchführbarer und kommerziell attraktiver Weg zu Silangruppen-haltigen Polymeren führt über Isocyanatgruppen-haltige Polyurethanpolymere, welche mit geeigneten Organosilanen umgesetzt werden. Dazu werden meist Aminosilane eingesetzt. Allerdings weisen so hergestellte Polymere wegen der bei der Umsetzung mit dem Aminosilan gebildeten Harnstoffgruppen typischerweise hohe Viskositäten und/oder eine eingeschränkte Wärmebeständigkeit auf.

Bessere Eigenschaften in Bezug auf Viskosität und Wärmebeständigkeit weisen Silangruppen-haltige Polymere auf, in denen die Silangruppen über Urethan- anstelle von Harnstoffgruppen ans Polymer gebunden sind. Solche Systeme sind in der Gestalt von Umsetzungsprodukten aus Polyolen und Isocyanatosilanen bekannt. Dieser Weg ist kommerziell aber nur von beschränktem Interesse, da Isocyanatosilane teuer, wenig lagerfähig und stark toxisch sind. Grundsätzlich attraktiver erscheint der umgekehrte Weg zu Silangruppen-haltigen Polymeren mit Urethanbindungen, nämlich über die Umsetzung von Isocyanatgruppen-haltigen Polyurethanpolymeren mit Hydroxysilanen. Solche Polymere sind allerdings bisher kaum beschrieben worden. Dies liegt daran, dass die Herstellung von geeigneten Hydroxysilanen meist Schwierigkeiten bereitet, weil diese aufgrund einer schnellen Reaktion der Hydroxylgruppe mit der Silangruppe zur Selbstkondensation neigen und deshalb häufig sehr unrein und/oder wenig lagerstabil sind.

US 5,587,502 offenbart Hydroxysilane, erhalten durch Umsetzen von Aminosilanen mit cyclischen Alkylencarbonaten, und von diesen ausgehende Silangruppen-haltige Polymere. Diese Silangruppen-haltigen Polymere weisen aber unbefriedigende Wärmebeständigkeiten auf.

WO 2013/174891 und WO 2013/174892 offenbaren Hydroxysilane, erhalten durch Umsetzen von Aminosilanen mit Lactonen bzw. durch Umsetzen von Epoxysilanen mit sekundären Aminen, und von diesen ausgehende Silangruppen-haltige Polymere. Die offenbarten Silangruppen-haltigen Polymere sind aber bezüglich Lagerstabilität noch verbesserungsfähig.

### Darstellung der Erfindung

Aufgabe der vorliegenden Erfindung ist es daher, ein Silangruppen-haltiges Polymer zur Verfügung zu stellen, welches niedrigviskos ist, eine gute Lagerstabilität aufweist, mit Feuchtigkeit schnell vernetzt und im ausgehärteten Zustand über eine gute Wärmebeständigkeit verfügt.

Überraschenderweise wurde gefunden, dass ein Polymer nach Anspruch 1 diese Aufgabe löst. Das Polymer ist in einem einfachen Verfahren aus kommerziell gut erhältlichen Rohstoffen in hoher Reinheit herstellbar. Es ist sehr lagerstabil, überraschenderweise auch mit den sehr reaktiven Methoxysilangruppen, und härtet mit Feuchtigkeit schnell zu einem nichtklebrigen elastischen Material mit guter Wärmebeständigkeit aus.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Polymer mit Endgruppen der Formel (I), 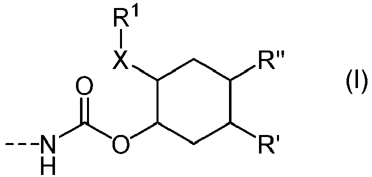 wobei
entweder R' für einen Rest der Formel (II) und R" für einen Wasserstoff-Rest oder R' für einen Wasserstoff-Rest und R" für einen Rest der Formel (II) stehen; 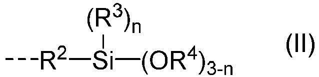
R¹ für einen Kohlenwasserstoff-Rest mit 1 bis 18 C-Atomen, welcher gegebenenfalls Heteroatome in Form von Ether-Sauerstoff, Ester-Sauerstoff, Thioether-Schwefel oder tertiärem Amin-Stickstoff aufweist, steht;
R² für einen linearen oder verzweigten Alkylen- oder Cycloalkylen-Rest mit 1 bis 20 C-Atomen, gegebenenfalls mit aromatischen Anteilen, und gegebenenfalls mit einem oder mehreren Heteroatomen, steht;
R³ für einen Alkyl-Rest mit 1 bis 8 C-Atomen steht;
R⁴ für einen aliphatischen oder cycloaliphatischen oder arylaliphatischen Kohlenwasserstoff-Rest mit 1 bis 12 C-Atomen, welcher gegebenenfalls einen oder zwei Ether-Sauerstoffe aufweist, steht;
X für O oder für S steht; und
n für 0 oder 1 oder 2 steht.

Im vorliegenden Dokument bezeichnet der Begriff "Alkoxysilangruppe" oder kurz "Silangruppe" eine an einen organischen Rest gebundene Silylgruppe mit einem bis drei, insbesondere zwei oder drei, hydrolysierbaren Alkoxy-Resten am Silicium-Atom. Als "Methoxysilangruppe" wird eine Silangruppe bezeichnet, die als Alkoxy-Reste ausschliesslich Methoxy-Reste aufweist. Als "Ethoxysilangruppe" wird eine Silangruppe bezeichnet, die als Alkoxy-Reste ausschliesslich Ethoxy-Reste aufweist.

Der Begriff "Alkoxysilan" oder kurz "Silan" bezeichnet eine organische Verbindung, welche mindestens eine Silangruppe aufweist.

Als "Hydroxysilan", "Epoxysilan", "Isocyanatosilan", "Aminosilan" bzw. "Mercaptosilan" werden Silane bezeichnet, die am organischen Rest zusätzlich zur Silangruppe eine oder mehrere Hydroxyl-, Epoxy-, Isocyanato-, Amino- bzw. Mercaptogruppen aufweisen.

Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.

Mit dem Begriff "Viskosität" wird im vorliegenden Dokument die dynamische Viskosität oder Scherviskosität bezeichnet, welche durch das Verhältnis zwischen der Schubspannung und der Scherrate (Geschwindigkeitsgefälle) definiert ist und wie in den Ausführungsbeispielen beschrieben bestimmt wird. Eine gestrichelte Linie in den Formeln in diesem Dokument stellt jeweils die Bindung zwischen einem Substituenten und dem zugehörigen Molekülrest dar. Als "Raumtemperatur" wird eine Temperatur von 23 °C bezeichnet.

Die Endgruppen der Formel (I) entsprechen entweder der Formel (la) oder der Formel (Ib).

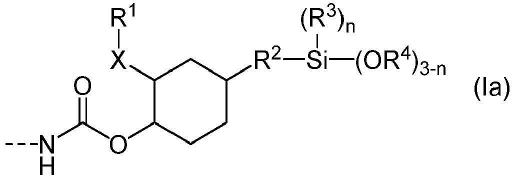

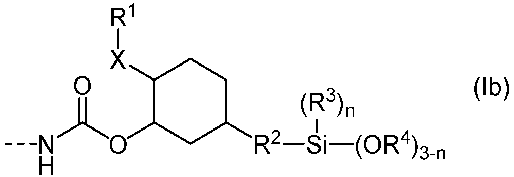

In den Formeln (Ia) und (Ib) weisen R¹, R², R³, R⁴, X und n die bereits genannten Bedeutungen auf.

In einer Ausführungsform der Erfindung steht R¹ für einen aromatischen Kohlenwasserstoff-Rest mit 6 bis 18 C-Atomen, welcher gegebenenfalls substituiert ist und gegebenenfalls Heteroatome in Form von Ether-Sauerstoff, Ester-Sauerstoff, Thioether-Schwefel oder tertiärem Amin-Stickstoff aufweist, bevorzugt für 4-tert.Butylphenyl, 4-Nonylphenyl, 4-Dodecylphenyl, 2,3-Dimethylphenyl, 2,4-Dimethylphenyl oder 2,5-Dimethylphenyl.

In einer bevorzugten Ausführungsform der Erfindung steht R¹ für einen aliphatischen oder cycloaliphatischen oder arylaliphatischen Kohlenwasserstoff-Rest mit 1 bis 18 C-Atomen, welcher gegebenenfalls Heteroatome in Form von Ether-Sauerstoff, Ester-Sauerstoff, Thioether-Schwefel oder tertiärem Amin-Stickstoff aufweist. Diese Silangruppen-haltigen Polymere sind aus toxikologischen Gründen vorteilhaft.

Besonders bevorzugt steht R¹ für einen aliphatischen oder cycloaliphatischen oder arylaliphatischen Kohlenwasserstoff-Rest mit 1 bis 12, insbesondere 1 bis 8, C-Atomen, welcher gegebenenfalls ein oder zwei Ether-Sauerstoffe aufweist.

Am meisten bevorzugt steht R¹ für einen Methyl-Rest oder für einen Ethyl-Rest.

Bevorzugt steht R² für einen Alkylen-Rest mit 1 bis 6 C-Atomen, insbesondere für einen 1,2-Ethylen-Rest.

Bevorzugt steht R³ für einen Methyl-Rest.

Bevorzugt steht R⁴ für einen Methyl-Rest oder für einen Ethyl-Rest. Diese Endgruppen der Formel (I) sind besonders reaktiv.

R⁴ steht insbesondere für einen Methyl-Rest. Diese Endgruppen der Formel (I) sind mit Feuchtigkeit besonders reaktiv, wodurch das Silangruppen-haltige Polymer besonders schnell aushärtet.

R⁴ steht weiterhin insbesondere für einen Ethyl-Rest. Diese Endgruppen der Formel (I) spalten bei ihrer Aushärtung kein Methanol ab, was aus toxikologischen Gründen vorteilhaft ist.

Bevorzugt steht X für O. Diese Silangruppen-haltigen Polymere sind vom Geruch her vorteilhaft.

Besonders bevorzugt steht X für O und R¹ und R⁴ stehen für den gleichen Rest, insbesondere beide für einen Methyl-Rest oder beide für einen Ethyl-Rest.

Bevorzugt steht n für 0 oder 1, insbesondere für 0. Diese Endgruppen der Formel (I) hydrolysieren bei Kontakt mit Feuchtigkeit besonders schnell und ergeben Silangruppen-haltige Polymere mit besonders guten mechanischen Eigenschaften.

Die bevorzugten Endgruppen der Formel (I) sind besonders gut zugänglich und in besonders reiner Qualität herstellbar.

Bevorzugt weist das Polymer im Mittel eine Funktionalität im Bereich von 1.3 bis 4, insbesondere 1.5 bis 3, besonders bevorzugt 1.7 bis 2.8, in Bezug auf Endgruppen der Formel (I) auf.

Bevorzugt weist das Polymer mit Endgruppen der Formel (I) ein mittleres Molekulargewicht im Bereich von 1'000 bis 30'000 g/mol, bevorzugt 2'000 bis 25'000 g/mol, besonders bevorzugt 3'000 bis 20'000 g/mol, auf.

Ein solches Polymer ermöglicht gute mechanische Eigenschaften, insbesondere eine hohe Dehnbarkeit.

Ein bevorzugtes Polymer mit Endgruppen der Formel (I) ist ein bei Raumtemperatur flüssiger Silangruppen-haltiger Polyether. Es weist bevorzugt mehrheitlich Oxyalkylen-Einheiten, insbesondere 1,2-Oxypropylen-Einheiten, auf. Seine Endgruppen der Formel (I) sind bevorzugt mehrheitlich an cycloaliphatische oder aromatische Reste gebunden, insbesondere an von Isophorondiisocyanat (IPDI) oder von 2,4- und/oder 2,6-Toluylendiisocyanat (TDI) abgeleitete Reste. Ein solches Polymer weist eine tiefe Viskosität auf und ermöglicht gute elastische Eigenschaften. Es eignet sich insbesondere als Bindemittel in bei Raumtemperatur applizierbaren Klebstoffen oder Dichtstoffen oder Beschichtungen. Ein solches Polymer ist bevorzugt frei von Isocyanatgruppen. Mit an cycloaliphatische Reste gebundenen Endgruppen der Formel (I) ist es besonders lichtstabil.

Ein weiteres bevorzugtes Polymer mit Endgruppen der Formel (I) ist ein bei Raumtemperatur fester Polyester und/oder ein bei Raumtemperatur festes Polycarbonat, insbesondere ein Polyester. Seine Endgruppen der Formel (I) sind mehrheitlich an cycloaliphatische oder aromatische Reste gebunden, bevorzugt an von Isophorondiisocyanat (IPDI) oder von 4,4'-, 2,4'- und/oder 2,2'-Diphenylmethandiisocyanat (MDI) abgeleitete Reste. Ein solches Polymer eignet sich insbesondere als Bindemittel in heiss applizierbaren Klebstoffen, sogenannten Heissschmelzklebstoffen. Ein solches Polymer kann neben Endgruppen der Formel (I) auch Isocyanatgruppen enthalten. Mit an cycloaliphatische Reste gebundenen Endgruppen der Formel (I) ist es besonders lichtstabil.

Ein weiterer Gegenstand der Erfindung ist ein Verfahren zur Herstellung eines Polymers mit Endgruppen der Formel (I) durch Umsetzung von mindestens einem Hydroxysilan der Formel (III) mit mindestens einem Isocyanatgruppen-haltigen Polyurethanpolymer.

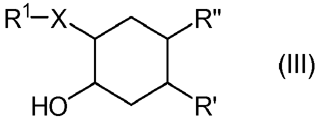

In der Formel (III) weisen R¹, R', R" und X die bereits genannten Bedeutungen auf.

Das Hydroxysilan der Formel (III) entspricht entweder der Formel (IIIa) oder der Formel (IIIb).

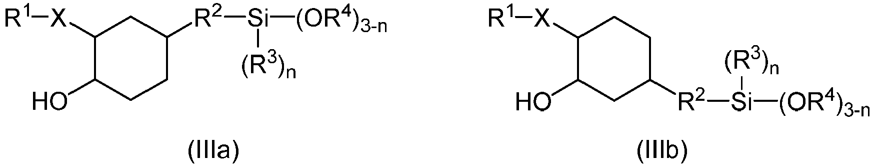

In den Formeln (IIIa) und (IIIb) weisen R¹, R², R³, R⁴, X und n die bereits genannten Bedeutungen auf.

Die Formeln (IIIa) und (IIIb) umfassen alle für die jeweilige Struktur möglichen Diastereomere.

Die Umsetzung wird bevorzugt unter Feuchtigkeitsausschluss bei einer Temperatur im Bereich von 20 bis 160 °C durchgeführt. Gegebenenfalls wird ein Katalysator eingesetzt, insbesondere ein tertiäres Amin oder eine Metallverbindung, insbesondere eine Bismut(III)-, Zink(II)-, Zirkonium(IV)- oder Zinn(II)-Verbindung oder eine Organozinn(IV)-Verbindung. Das Hydroxysilan der Formel (III) wird dabei bevorzugt in einem überstöchiometrischen oder stöchiometrischen Verhältnis zu den Isocyanatgruppen eingesetzt, so dass ein Polymer mit Endgruppen der Formel (I) erhalten wird, welches frei ist von Isocyanatgruppen. Insbesondere wird mit einem OH/NCO-Verhältnis im Bereich von 1 bis 1.25 gearbeitet. Die Umsetzung wird vorteilhaft durch Messung des Isocyanatgehalts des erhaltenen Polymers kontrolliert, beispielsweise mittels IR-Spektroskopie.

Für den Fall, dass das Hydroxysilan der Formel (III) unterstöchiometrisch eingesetzt wird, enthält das erhaltene Polymer neben Endgruppen der Formel (I) zusätzlich Isocyanatgruppen. Ein solches Polymer wird bevorzugt hergestellt, indem ein OH/NCO-Verhältnis im Bereich von 0.1 bis 0.9, besonders bevorzugt 0.2 bis 0.8, insbesondere 0.3 bis 0.7, verwendet wird. Das erhaltene Polymer weist einen deutlich reduzierten Gehalt an monomerem Diisocyanat auf im Vergleich zum eingesetzten Isocyanatgruppen aufweisenden Polyurethanpolymer, was aus toxikologischen Gründen vorteilhaft ist.

Ein geeignetes Isocyanatgruppen-haltiges Polyurethanpolymer wird insbesondere erhalten aus der Umsetzung von mindestens einem Polyol mit einer überstöchiometrischen Menge von mindestens einem Diisocyanat. Die Umsetzung wird bevorzugt unter Feuchtigkeitsausschluss bei einer Temperatur im Bereich von 50 bis 160 °C durchgeführt, gegebenenfalls in Anwesenheit geeigneter Katalysatoren. Insbesondere wird der Überschuss an Diisocyanat so gewählt, dass im resultierenden Polyurethanpolymer nach der Umsetzung aller Hydroxylgruppen ein Gehalt an freien Isocyanatgruppen von 0.1 bis 5 Gewichts-%, bevorzugt 0.2 bis 4 Gewichts-%, besonders bevorzugt 0.3 bis 3 Gewichts-%, bezogen auf das gesamte Polymer, verbleibt. Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Als Polyol für sind insbesondere die folgenden handelsüblichen Polyole oder beliebige Mischungen davon geeignet:
- Polyetherpolyole, insbesondere Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder mehreren aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen. Ebenfalls geeignet sind Polyetherpolyole mit darin dispergierten Polymerpartikeln, insbesondere solche mit Styrol-Acrylnitril-Partikeln (SAN) oder Acrylnitril-Methylmethacrylat-Partikeln.
   Bevorzugte Polyetherpolyole sind Polyoxypropylendiole und/oder Polyoxypropylentriole, oder sogenannte Ethylenoxid-terminierte (EO-endcapped) Polyoxypropylendiole oder -triole. Letztere sind Polyoxyethylen-polyoxypropylen-Mischpolyole, die insbesondere dadurch erhalten werden, dass Polyoxypropylendiole oder -triole nach Abschluss der Polypropoxylierungsreaktion mit Ethylenoxid weiter alkoxyliert werden und dadurch schliesslich primäre Hydroxylgruppen aufweisen.
   Bevorzugte Polyetherpolyole weisen einen Ungesättigtheitsgrad von weniger als 0.02 mEq/g, insbesondere weniger als 0.01 mEq/g auf.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
   Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro® (früher Hycar®) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Als Polyol bevorzugt sind Polyetherpolyole, Polyesterpolyole oder Polycarbonatpolyole.

Besonders bevorzugt sind bei Raumtemperatur flüssige Polyoxypropylendiole mit einem mittleren Molekulargewicht im Bereich von 1'000 bis 20'000 g/mol, bevorzugt von 2'000 bis 15'000 g/mol. Diese Polyole sind besonders geeignet für die Herstellung von bei Raumtemperatur flüssigen Polymeren mit Endgruppen der Formel (I).

Besonders bevorzugt sind weiterhin bei Raumtemperatur feste, amorphe oder teilkristalline oder kristalline Polyesterpolyole oder Polycarbonatpolyole, insbesondere Polyesterdiole mit einem mittleren Molekulargewicht im Bereich von 1'500 bis 15'000 g/mol, bevorzugt 1'500 bis 8000 g/mol, insbesondere 2'000 bis 5'500 g/mol, insbesondere kristalline oder teilkristalline Adipinsäure/Hexandiol-Polyester oder Dodecandicarbonsäure/Hexandiol-Polyester. Diese Polyole sind besonders geeignet für die Herstellung von bei Raumtemperatur festen Polymeren mit Endgruppen der Formel (I).

Als Diisocyanat für die Herstellung eines Isocyanatgruppen-haltigen Polyurethanpolymers geeignet sind insbesondere im Handel erhältliche aliphatische, cycloaliphatische, arylaliphatische oder aromatische, bevorzugt cycloaliphatische oder aromatische, Diisocyanate.

Bevorzugte Diisocyanate sind 1,6-Hexamethylendiisocyanat (HDI), 1-Isocyanato-3,3,5-trimethyl-5-isocyanatomethyl-cyclohexan (=Isophorondiisocyanat oder IPDI), 2,4- und/oder 2,6-Toluylendiisocyanat (TDI) oder beliebige Gemische dieser Isomeren, 4,4'-, 2,4'- und/oder 2,2'-Diphenylmethandiisocyanat oder beliebige Gemische dieser Isomeren (MDI).

Für die Umsetzung mit bei Raumtemperatur flüssigen Polyolen sind IPDI oder TDI am meisten bevorzugt. Damit werden Polymere mit tiefer Viskosität erhalten. Ganz besonders bevorzugt ist IPDI. Damit sind besonders lichtechte Polymere erhältlich.

Für die Umsetzung mit bei Raumtemperatur festen Polyolen ist IPDI oder MDI am meisten bevorzugt. Damit sind insbesondere Polymere für reaktive Heissschmelzklebstoffe mit besonders vorteilhaften Eigenschaften zugänglich.

Bei der Herstellung des Polymers mit Endgruppen der Formel (I) können zusätzlich zum Polyol weitere Alkohole mitverwendet werden, insbesondere niedrigmolekulare ein- oder mehrwertige Alkohole oder polymere Monole. Solche Alkohole können bei der Herstellung des Isocyanatgruppen-haltigen Polyurethanpolymers als Zusatz zum Polyol mitverwendet werden, oder sie können nach der Umsetzung des Hydroxysilans der Formel (III) und dem Isocyanatgruppen-haltigen Polyurethanpolymer zugesetzt werden, beispielsweise um mit vorhandenen Isocyanatgruppen zu reagieren. Es kann inbesondere vorteilhaft sein, ein Polymer mit Endgruppen der Formel (I), welches zusätzlich Isocyanatgruppen enthält, mit beispielsweise Ethanol zu versetzten, um die Isocyanatgruppen umzusetzen. Anschliessend kann überschüssiger Ethanol destillativ entfernt werden.

Ein zur Umsetzung mit dem Isocyanatgruppen-haltigen Polyurethanpolymer geeignetes Hydroxysilan der Formel (III) wird bevorzugt erhalten durch die Umsetzung von mindestens einem Epoxysilan der Formel (IV) mit mindestens einem Alkohol oder Thiol oder Phenol oder Thiophenol der Formel (V).

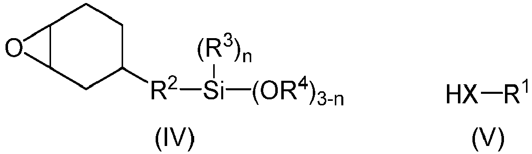

In den Formeln (IV) und (V) weisen R¹, R², R³, R⁴, X und n die bereits genannten Bedeutungen auf.

Ein Alkohol oder Thiol oder Phenol oder Thiophenol der Formel (V) kann dabei entweder an den Kohlenstoff in 2-oder in 3-Stellung zum C-Atom, an welches der Silangruppen-haltige Substituent gebunden ist, addiert werden, wodurch entweder ein Hydroxysilan der Formel (IIIa) oder ein Hydroxysilan der Formel (IIIb) entsteht. Aus dieser Umsetzung werden typischerweise Mischungen aus den zwei Hydroxysilanen der Formel (IIIa) und (IIIb) erhalten.

Die Umsetzung wird bevorzugt bei Temperaturen im Bereich von 50 bis 140 °C, insbesondere 70 bis 120 °C, durchgeführt.

Für den Fall, dass ein Alkohol der Formel (V) eingesetzt wird, wird dieser bevorzugt so gewählt, dass der Rest R¹ gleich ist wie der Rest R⁴ des Epoxysilans der Formel (IV). Der Alkohol der Formel (V) wird bevorzugt stöchiometrisch oder überstöchiometrisch in Bezug auf das Epoxysilan der Formel (IV) eingesetzt. Insbesondere wird mit einem Alkohol/Epoxysilan-Verhältnis im Bereich von 1.0 bis 6.0, bevorzugt 2.0 bis 5.0, gearbeitet.

Für den Fall, dass ein Thiol oder ein Phenol oder ein Thiophenol der Formel (V) eingesetzt wird, wird dieses bevorzugt unterstöchiometrisch oder stöchiometrisch in Bezug auf das Epoxysilan der Formel (IV) eingesetzt. Insbesondere wird mit einem Thiol/Epoxysilan- bzw. Phenol/Epoxysilan- bzw. Thiophenol/Epoxysilan-Verhältnis im Bereich von 0.5 bis 1.0, bevorzugt 0.8 bis 1.0, gearbeitet. Überschüssiges Thiol bzw. Phenol bzw. Thiophenol kann zu geruchlichen bzw. toxikologischen Problemen führen.

Bei der Umsetzung kann ein Katalysator eingesetzt werden, insbesondere ein Imidazol, ein Hydroxyalkylamin, ein Alkohol, ein Phenol, eine Brønsted-Säure wie insbesondere Essigsäure oder Methansulfonsäure, eine Lewis-Säure wie insbesondere Aluminium(III)-acetylacetonat, Aluminium(III)-isopropoxid, Aluminium(III)-ethoxid, Lanthan(III)-triflat, Zinkdichlorid oder Zink-bis(ethylhexanoat), oder ein Metallsalz wie insbesondere Natriumdodecylsulfat oder Lithiumperchlorat.

Bevorzugt werden nach der Umsetzung allfällig vorhandene flüchtige Verbindungen, insbesondere überschüssiger Alkohol, aus dem Reaktionsprodukt entfernt, insbesondere durch Destillation.

Wird ein Alkohol eingesetzt, bei welchem sich der Rest R¹ vom Rest R⁴ der Silangruppe unterscheidet, so können während der Herstellung Umesterungsreaktionen an der Silangruppe auftreten, wobei Hydroxysilane mit Alkoxygruppen am Silicium, welche abgeleitet sind vom eingesetzten Alkohol der Formel (V), entstehen.

In einer Ausführungsform der Herstellung wird bevorzugt derjenige Alkohol verwendet, welcher den Alkoxygruppen am verwendeten Epoxysilan entspricht. Dabei entsteht das Hydroxysilan der Formel (III) insbesondere in einer Reinheit von mindestens 80 Gewichts-%, bevorzugt mindestens 85 Gewichts-%. Die hohe Reinheit solcher Hydroxysilane ist überraschend, weisen Hydroxysilane nach dem Stand der Technik doch typischerweise Gehalte an Verunreinigungen von 20 oder mehr Gewichts-% auf.

Als Epoxysilan der Formel (IV) wird bevorzugt ein *β-*(3,4-Epoxycyclohexyl)-ethyltrialkoxysilan eingesetzt. Besonders geeignet sind *β-*(3,4-Epoxycyclohexyl)ethyltrimethoxysilan, kommerziell erhältlich beispielsweise als Silquest® A-186 (von Momentive Performance Materials), oder *β-*(3,4-Epoxycyclohexyl)-ethyltriethoxysilan, kommerziell erhältlich beispielsweise als CoatOSil® 1770 (von Momentive Performance Materials).

Als Alkohol der Formel (V) geeignet sind aliphatische oder cycloaliphatische oder arylaliphatische Alkohole, insbesondere Methanol, Ethanol, 1-Propanol, Isopropanol, 1-Butanol, 2-Butanol, Isobutanol, 1-Pentanol (Amylalkohol), Isopentanol (Isoamylalkohol), 2-Methyl-1-butanol, 2-Pentanol, 3-Pentanol, 1-Hexanol, 2-Methyl-1-pentanol, 4-Methyl-2-pentanol, 2-Ethyl-1-butanol, 1-Heptanol, 1-Octanol, 2-Ethyl-1-hexanol, 1-Nonanol, 1-Decanol, 1-Undecanol, 1-Dodecanol, 1-Methoxy-2-propanol, 2-Methoxyethanol (Methylglykol), 2-(2-Methoxyethoxy)ethanol (Methyldiglykol), Cyclohexanol, 2-Methylcyclohexanol, 4-Methylcyclohexanol, Benzylalkohol, 2-Methylbenzylalkohol, 4-Methylbenzylalkohol, 4-Ethylbenzylalkohol, 4-Isopropylbenzylalkohol, 4-tert.Butylbenzylalkohol, 4-Methoxybenzylalkohol, N,N-Dimethylethanolamin, N,N-Diethylethanolamin, N,N-Dibutylethanolamin oder N-(2-Hydroxyethyl)morpholin.

Davon bevorzugt ist Methanol, Ethanol, Isopropanol, 1-Butanol, Isobutanol, 1-Pentanol, 1-Hexanol, 2-Methoxyethanol, 2-(2-Methoxyethoxy)ethanol, Cyclohexanol oder Benzylalkohol.

Besonders bevorzugt ist Methanol oder Ethanol.

Besonders vorteilhaft wird beim Einsatz eines Epoxysilans mit Methoxysilangruppen mit Methanol und beim Einsatz eines Epoxysilans mit Ethoxysilangruppen mit Ethanol als Alkohol der Formel (V) gearbeitet.

Als Thiol der Formel (V) geeignet sind aliphatische oder cycloaliphatische oder arylaliphatische Thiole, insbesondere 2-(2-Methoxyethoxy)ethanthiol, Thioglycolsäuremethylester, Thioglycolsäureethylester, Thioglycolsäure-2-ethylhexylester, 3-Mercaptopropionsäuremethylester, 3-Mercaptopropionsäureethylester oder 3-Mercaptopropionsäure-2-ethylhexylester. Davon bevorzugt ist 2-(2-Methoxyethoxy)ethanthiol oder Thioglycolsäure-2-ethylhexylester.

Als Phenol der Formel (V) geeignet sind insbesondere Phenol, o-Kresol, m-Kresol, p-Kresol, 4-tert.Butylphenol, 4-Nonylphenol, 4-Dodecylphenol, 2,3-Dimethylphenol (o-Xylenol), 2,4-Dimethylphenol (m-Xylenol), 2,5-Dimethylphenol (p-Xylenol), 2,6-Dimethylphenol, 3,4-Dimethylphenol, 3,5-Dimethylphenol, 2-Methoxyphenol (Guajacol), 3-Methoxyphenol, 4-Methoxyphenol, 2,6-Dimethoxyphenol, 2,4,6-Tris(dimethylaminomethyl)phenol, 1-Naphthol oder 2-Naphthol. Davon bevorzugt ist 4-tert.Butylphenol, 4-Nonylphenol, 4-Dodecylphenol, o-Xylenol, m-Xylenol oder p-Xylenol.

Als Thiophenol der Formel (V) geeignet sind insbesondere Thiophenol, 4-Methyl-thiophenol, 4-tert.Butyl-thiophenol, 4-Nonyl-thiophenol, 4-Dodecyl-thiophenol, 2,5-Dimethyl-thiophenol, 2,6-Dimethyl-thiophenol, 3-Methoxy-thiophenol, 4-Methoxy-thiophenol, 1-Thionaphthol oder 2-Thionaphthol.

Als Alkohol oder Thiol oder Phenol oder Thiophenol der Formel (V) bevorzugt sind Alkohole.

Das Hydroxysilan der Formel (III) zur Umsetzung mit dem Isocyanatgruppen-haltigen Polyurethanpolymer ist bevorzugt ausgewählt aus der Gruppe bestehend aus 2-Methoxy-4-(2-trimethoxysilylethyl)cyclohexan-1-ol, 2-Methoxy-4-(2-ethoxydimethoxysilylethyl)cyclohexan-1-ol, 2-Methoxy-4-(2-methoxydiethoxysilylethyl)cyclohexan-1-ol, 2-Methoxy-4-(2-triethoxysilylethyl)cyclohexan-1-ol, 2-Ethoxy-4-(2-trimethoxysilylethyl)cyclohexan-1-ol, 2-Ethoxy-4-(2-ethoxydimethoxysilylethyl)cyclohexan-1-ol, 2-Ethoxy-4-(2-methoxydiethoxysilylethyl)cyclohexan-1-ol, 2-Ethoxy-4-(2-triethoxysilylethyl)cyclohexan-1-ol, 2-Isopropoxy-4-(2-triisopropoxysilylethyl)cyclohexan-1-ol, 2-Isopropoxy-4-(2-methoxydiisopropoxysilylethyl)cyclohexan-1-ol, 2-Isopropoxy-4-(2-ethoxydiisopropoxysilylethyl)-cyclohexan-1-ol, 2-Isopropoxy-4-(2-isopropoxydimethoxysilylethyl)cyclohexan-1-ol, 2-Isopropoxy-4-(2-isopropoxydiethoxysilylethyl)cyclohexan-1-ol, 2-Isopropoxy-4-(2-trimethoxysilylethyl)cyclohexan-1-ol, 2-Isopropoxy-4-(2-triethoxysilylethyl)cyclohexan-1-ol, 2-Butoxy-4-(2-tributoxysilylethyl)cyclohexan-1-ol, 2-Butoxy-4-(2-methoxydibutoxysilylethyl)cyclohexan-1-ol, 2-Butoxy-4-(2-ethoxydibutoxysilylethyl)cyclohexan-1-ol, 2-Butoxy-4-(2-butoxydimethoxysilylethyl)-cyclohexan-1-ol, 2-Butoxy-4-(2-butoxydiethoxysilylethyl)cyclohexan-1-ol, 2-Butoxy-4-(2-trimethoxysilylethyl)cyclohexan-1-ol, 2-Butoxy-4-(2-triethoxysilylethyl)cyclohexan-1-ol, 2-Isobutoxy-4-(2-triisobutoxysilylethyl)cyclohexan-1-ol, 2-Isobutoxy-4-(2-methoxydiisobutoxysilylethyl)cyclohexan-1-ol, 2-Isobutoxy-4-(2-ethoxydiisobutoxysilylethyl)cyclohexan-1-ol, 2-Isobutoxy-4-(2-isobutoxydimethoxysilylethyl)cyclohexan-1-ol, 2-Isobutoxy-4-(2-isobutoxydiethoxysilylethyl)cyclohexan-1-ol, 2-Isobutoxy-4-(2-trimethoxysilylethyl)cyclohexan-1-ol, 2-Isobutoxy-4-(2-triethoxysilylethyl)cyclohexan-1-ol, 2-Pentoxy-4-(2-tripentoxysilylethyl)cyclohexan-1-ol, 2-Pentoxy-4-(2-methoxydipentoxysilylethyl)cyclohexan-1-ol, 2-Pentoxy-4-(2-ethoxydipentoxysilylethyl)cyclohexan-1-ol, 2-Pentoxy-4-(2-pentoxydimethoxysilylethyl)cyclohexan-1-ol, 2-Pentoxy-4-(2-pentoxydiethoxysilylethyl)cyclohexan-1-ol, 2-Pentoxy-4-(2-trimethoxysilylethyl)cyclohexan-1-ol, 2-Pentoxy-4-(2-triethoxysilylethyl)cyclohexan-1-ol, 2-Hexoxy-4-(2-trihexoxysilylethyl)cyclohexan-1-ol, 2-Hexoxy-4-(2-methoxydihexoxysilylethyl)-cyclohexan-1-ol, 2-Hexoxy-4-(2-ethoxydihexoxysilylethyl)cyclohexan-1-ol, 2-Hexoxy-4-(2-hexoxydimethoxysilylethyl)cyclohexan-1-ol, 2-Hexoxy-4-(2-hexoxydiethoxysilylethyl)cyclohexan-1-ol, 2-Hexoxy-4-(2-trimethoxysilylethyl)cyclohexan-1-ol, 2-Hexoxy-4-(2-triethoxysilylethyl)cyclohexan-1-ol, 2-(2-Methoxyethoxy)-4-(2-tris(2-methoxyethoxy)silylethyl)cyclohexan-1-ol, 2-(2-Methoxyethoxy)-4-(2-methoxy-bis(2-methoxyethoxy)silylethyl)cyclohexan-1-ol, 2-(2-Methoxyethoxy)-4-(2-ethoxy-bis(2-methoxyethoxy)silylethyl)cyclohexan-1-ol, 2-(2-Methoxyethoxy)-4-(2-dimethoxy-(2-methoxyethoxy)silylethyl)cyclohexan-1-ol, 2-(2-Methoxyethoxy)-4-(2-diethoxy-(2-methoxyethoxy)silylethyl)cyclohexan-1-ol, 2-(2-Methoxyethoxy)-4-(2-trimethoxysilylethyl)cyclohexan-1-ol, 2-(2-Methoxyethoxy)-4-(2-triethoxysilylethyl)cyclohexan-1-ol, 2-(2-Methoxyethoxy)ethoxy-4-(2-tris(2-(2-methoxyethoxy)ethoxy)silylethyl)cyclohexan-1-ol, 2-(2-Methoxyethoxy)ethoxy-4-(2-methoxy-bis(2-(2-methoxyethoxy)ethoxy)silylethyl)cyclohexan-1-ol, 2-(2-Methoxyethoxy)ethoxy-4-(2-ethoxy-bis(2-(2-methoxyethoxy)ethoxy)silylethyl)cyclohexan-1-ol, 2-(2-Methoxyethoxy)ethoxy-4-(2-dimethoxy-(2-(2-methoxyethoxy)ethoxy)silylethyl)cyclohexan-1-ol, 2-(2-Methoxyethoxy)ethoxy-4-(2-diethoxy-(2-(2-methoxyethoxy)ethoxy)silylethyl)cyclohexan-1-ol, 2-(2-Methoxyethoxy)ethoxy-4-(2-trimethoxysilylethyl)cyclohexan-1-ol, 2-(2-Methoxyethoxy)ethoxy-4-(2-triethoxysilylethyl)cyclohexan-1-ol, 2-Cyclohexoxy-4-(2-tricyclohexoxysilylethyl)cyclohexan-1-ol, 2-Cyclohexoxy-4-(2-methoxydicyclohexoxysilylethyl)cyclohexan-1-ol, 2-Cyclohexoxy-4-(2-ethoxydicyclohexoxysilylethyl)cyclohexan-1-ol, 2-Cyclohexoxy-4-(2-cyclohexoxydimethoxysilylethyl)cyclohexan-1-ol, 2-Cyclohexoxy-4-(2-cyclohexoxydiethoxysilylethyl)cyclohexan-1-ol, 2-Cyclohexoxy-4-(2-trimethoxysilylethyl)cyclohexan-1-ol, 2-Cyclohexoxy-4-(2-triethoxysilylethyl)cyclohexan-1-ol, 2-Benzoxy-4-(2-tribenzoxysilylethyl)cyclohexan-1-ol, 2-Benzoxy-4-(2-methoxydibenzoxysilylethyl)cyclohexan-1-ol, 2-Benzoxy-4-(2-ethoxydibenzoxysilylethyl)cyclohexan-1-ol, 2-Benzoxy-4-(2-benzoxydimethoxysilylethyl)cyclohexan-1-ol, 2-Benzoxy-4-(2-benzoxydiethoxysilylethyl)cyclohexan-1-ol, 2-Benzoxy-4-(2-trimethoxysilylethyl)-cyclohexan-1-ol, 2-Benzoxy-4-(2-triethoxysilylethyl)cyclohexan-1-ol und die entsprechenden Verbindungen, bei welchen der Silangruppen-haltige Substituent in 5-Stellung anstatt in 4-Stellung steht.

Davon bevorzugt sind 2-Methoxy-4-(2-trimethoxysilylethyl)cyclohexan-1-ol, 2-Ethoxy-4-(2-triethoxysilylethyl)cyclohexan-1-ol, 2-Ethoxy-4-(2-trimethoxysilylethyl)cyclohexan-1-ol, 2-Ethoxy-4-(2-ethoxydimethoxysilylethyl)cyclohexan-1-ol, 2-Ethoxy-4-(2-methoxydiethoxysilylethyl)cyclohexan-1-ol, 2-(2-Methoxyethoxy)ethoxy-4-(2-tris(2-(2-methoxyethoxy)ethoxy)silylethyl)cyclohexan-1-ol oder die entsprechenden Verbindungen, bei welchen der Silangruppen-haltige Substituent in 5-Stellung anstatt in 4-Stellung steht.

Am meisten bevorzugt ist 2-Ethoxy-4(5)-(2-triethoxysilylethyl)cyclohexan-1-ol oder 2-Methoxy-4(5)-(2-trimethoxysilylethyl)cyclohexan-1-ol.

Gemische aus zwei Verbindungen, deren Silangruppen-haltiger Substituent in 4- beziehungsweise in 5-Stellung steht, sind mit der Schreibweise "4(5)" dargestellt.

Mit den bevorzugten Hydroxysilanen werden Polymere mit guter Lagerstabilität erhalten, welche mit Feuchtigkeit schnell zu vernetzten Kunststoffen mit guter Wärmebeständigkeit aushärten.

Ein weiterer Gegenstand der Erfindung ist ein Hydroxysilan der Formel (VII), 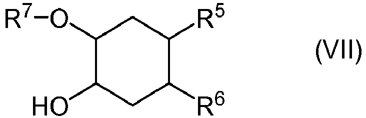 wobei
entweder R⁵ für einen Rest der Formel (VIII) und R⁶ für einen Wasserstoff-Rest oder R⁵ für einen Wasserstoff-Rest und R⁶ für einen Rest der Formel (VIII) stehen;

----(CH₂)₂-Si-(OR⁸)₃ (VIII)

und R⁷ und R⁸ entweder beide für einen Methyl-Rest oder beide für einen Ethyl-Rest stehen.

Das Hydroxysilan der Formel (VII) entspricht entweder der Formel (Vlla) oder der Formel (Vllb).

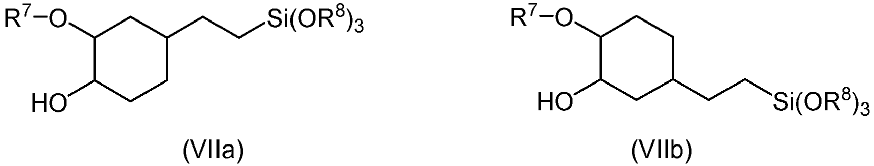

In den Formeln (Vlla) und (Vllb) weisen R⁷ und R⁸ die bereits genannten Bedeutungen auf.

Die Formeln (Vlla) und (Vllb) umfassen alle für die jeweilige Struktur möglichen Diastereomere.

Das Hydroxysilan der Formel (VII) ist in besonders einfach und in besonders reiner Qualität herstellbar und ist besonders geeignet für die Herstellung eines Polymers mit Endgruppen der Formel (I).

Das Polymer mit Endgruppen der Formel (I) ist unter Ausschluss von Feuchtigkeit lagerstabil. Bei Kontakt mit Feuchtigkeit hydrolysieren die Endgruppen der Formel (I). Dabei bilden sich Silanolgruppen (Si-OH-Gruppen) und durch nachfolgende Kondensationsreaktionen Siloxangruppen (Si-O-Si-Gruppen). Gegebenenfalls vorhandene weitere feuchtigkeitsreaktive Gruppen, insbesondere Isocyanatgruppen, reagieren ebenfalls mit vorhandener Feuchtigkeit. Als Ergebnis dieser Reaktionen härtet das Polymer zu einem vernetzten Kunststoff aus. Die Feuchtigkeit für die Aushärtung kann entweder aus der Luft stammen (Luftfeuchtigkeit), oder das Polymer kann mit einer Wasser enthaltenden Komponente in Kontakt gebracht werden, zum Beispiel durch Bestreichen, Besprühen oder Einmischen. Während der Aushärtung können Silanolgruppen mit beispielsweise Hydroxylgruppen eines Substrates, auf welchem das Polymer appliziert ist, kondensieren, wodurch bei der Vernetzung eine zusätzliche Verbesserung der Haftung auf dem Substrat erfolgen kann.

Ein hydrolysiertes oder partiell hydrolysiertes Polymer mit Endgruppen der Formel (I) enthält Endgruppen mit mindestens einer Silanolgruppe der Formel (VI).

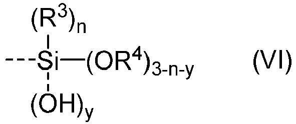

In der Formel (VI) steht y für 1 oder 2 oder 3, mit der Massgabe, dass y höchstens den Wert (3-n) aufweist. R³, R⁴ und n weisen die bereits genannten Bedeutungen auf.

Das Polymer mit Endgruppen der Formel (I) weist vorteilhafte Eigenschaften auf. Es weist eine relativ niedrige Viskosität auf, was für seine weitere Verarbeitung, insbesondere als Bestandteil einer härtbaren Zusammensetzung, vorteilhaft ist. Es ist sehr lagerstabil und härtet mit Feuchtigkeit bei einer langen Offenzeit überraschend schnell zu einem vernetzten Material aus, welches über gute Haftungseigenschaften verfügt.

Ein bei Raumtemperatur flüssiges Polymer mit Endgruppen der Formel (I) härtet mit Feuchtigkeit bei Raumtemperatur zu einem elastischen, nichtklebrigen Material mit hoher Festigkeit, hoher Dehnbarkeit und guter Wärmebeständigkeit aus. Bei hohen Temperaturen wie 90 °C oder 100 °C bleibt das ausgehärtete Polymer auch nach längerer Exposition elastisch, während viele Silangruppen-haltige Polymere aus dem Stand der Technik bereits nach kurzer Zeit deutlich an Festigkeit verlieren oder gar zerfliessen.

Ein bei Raumtemperatur festes Polymer mit Endgruppen der Formel (I) weist im unvernetzten Zustand eine gute thermische Stabilität auf, das heisst, es kann im erhitzten, geschmolzenen Zustand einige Zeit belassen werden, ohne dass eine starke Viskositätserhöhung oder Gelierung eintritt. Es vernetzt mit Feuchtigkeit zu einem Material von hoher Haftkraft, welches beim erneuten Erhitzen nicht mehr aufschmelzbar ist.

Ein weiterer Gegenstand der vorliegenden Erfindung ist eine härtbare Zusammensetzung umfassend mindestens ein Polymer mit Endgruppen der Formel (I) wie vorgängig beschrieben.

Bevorzugt enthält die härtbare Zusammensetzung mindestens einen weiteren Bestandteil ausgewählt aus Füllstoffen, Vernetzern, Weichmachern, Lösemitteln, Katalysatoren, Haftvermittlern, Trocknungsmitteln, Stabilisatoren, Pigmenten und Rheologiehilfsmitteln.

Bevorzugt stellt die härtbare Zusammensetzung einen Klebstoff oder einen Dichtstoff oder eine Beschichtung dar.

Die härtbare Zusammensetzung ist in einer bevorzugten Ausführungsform bei Raumtemperatur applizierbar und stellt insbesondere einen elastischen Klebstoff oder Dichtstoff oder eine elastische Beschichtung dar, insbesondere für die Fugenabdichtung oder für elastische Klebeverbindungen in Bau-oder Industrieanwendungen,. Typischerweise enthält sie ein bei Raumtemperatur flüssiges Polymer mit Endgruppen der Formel (I).

Eine bei Raumtemperatur applizierbare härtbare Zusammensetzung lässt sich bei Raumtemperatur in die gewünschte Form bringen, bevor sie aushärtet. Sie ist bei Raumtemperatur flüssig und/oder streichbar.

Bevorzugt weist die bei Raumtemperatur applizierbare Zusammensetzung einen Gehalt an Polymer mit Endgruppen der Formel (I) von 5 bis 90 Gewichts-%, insbesondere 10 bis 60 Gewichts-%, auf.

Als weiterer Bestandteil sind insbesondere Katalysatoren, Vernetzer, Weichmacher, Füllstoffe, Pigmente, Lösemittel, Haftvermittler, Trocknungsmittel, Rheologiehilfsmittel oder Stabilisatoren geeignet.

Bevorzugt enthält die bei Raumtemperatur applizierbare Zusammensetzung mindestens einen Katalysator, der die Vernetzung von Silangruppen-haltigen Polymeren beschleunigt. Dafür geeignet sind insbesondere Metallkatalysatoren und/oder stickstoffhaltige Verbindungen.

Geeignete Metallkatalysatoren sind insbesondere Verbindungen von Titan, Zirkonium, Aluminium oder Zinn, insbesondere Organozinn-Verbindungen, Organotitanate, Organozirkonate oder Organoaluminate, wobei diese Verbindungen insbesondere Alkoxygruppen, Aminoalkoxygruppen, Sulfonatgruppen, Carboxylgruppen, 1,3-Diketonatgruppen, 1,3-Ketoesteratgruppen, Dialkylphosphatgruppen oder Dialkylpyrophosphatgruppen aufweisen.

Besonders geeignete Organozinn-Verbindungen sind Dialkylzinnoxide, Dialkylzinndichloride, Dialkylzinndicarboxylate und Dialkylzinndiketonate, insbesondere Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat oder Dioctylzinndiacetylacetonat, oder Alkylzinnthioester.

Besonders geeignete Organotitanate sind:
- Titan(IV)-Komplexverbindungen mit zwei 1,3-Diketonat-Liganden, insbesondere 2,4-Pentandionat (=Acetylacetonat), und zwei Alkoholat-Liganden;
- Titan(IV)-Komplexverbindungen mit zwei 1,3-Ketoesterat-Liganden, insbesondere Ethylacetoacetat, und zwei Alkoholat-Liganden;
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden;
- Titan(IV)-Komplexverbindungen mit vier Alkoholat-Liganden;
- oder höherkondensierte Organotitanate, insbesondere oligomeres Titan(IV)-tetrabutanolat, auch als Polybutyltitanat bezeichnet;
wobei als Alkoholat-Liganden insbesondere Isobutoxy, n-Butoxy, Isopropoxy, Ethoxy oder 2-Ethylhexoxy geeignet sind.

Ganz besonders geeignet sind Bis(ethylacetoacetato)diisobutoxy-titan(IV), Bis-(ethylacetoacetato)diisopropoxy-titan(IV), Bis(acetylacetonato)diisopropoxy-titan(IV), Bis(acetylacetonato)diisobutoxy-titan(IV), Tris(oxyethyl)aminisopropoxy-titan(IV), Bis[tris(oxyethyl)amin]diisopropoxy-titan(IV), Bis(2-ethylhexan-1,3-dioxy)-titan(IV), Tris[2-((2-aminoethyl)amino)ethoxy]ethoxy-titan(IV), Bis(neopentyl(diallyl)oxy-diethoxy-titan(IV), Titan(IV)tetrabutanolat, Tetra(2-ethylhexyloxy)titanat, Tetra(isopropoxy)titanat oder Polybutyltitanat. Insbesondere geeignet sind die kommerziell erhältlichen Typen Tyzor® AA, GBA, GBO, AA-75, AA-65, AA-105, DC, BEAT, BTP, TE, TnBT, KTM, TOT, TPT oder IBAY (alle von Dorf Ketal); Tytan PBT, TET, X85, TAA, ET, S2, S4 oder S6 (alle von Borica Company Ltd.) und Ken-React® KR® TTS, 7, 9QS, 12, 26S, 33DS, 38S, 39DS, 44, 134S, 138S, 133DS, 158FS oder LICA® 44 (alle von Kenrich Petrochemicals).

Besonders geeignete Organozirkonate sind die kommerziell erhältlichen Typen Ken-React® NZ® 38J, KZ® TPPJ, KZ® TPP, NZ® 01, 09, 12 38, 44 oder 97 (alle von Kenrich Petrochemicals) oder Snapcure® 3020, 3030, 1020 (alle von Johnson Matthey & Brandenberger).

Ein besonders geeignetes Organoaluminat ist der kommerziell erhältliche Typ K-Kat 5218 (von King Industries).

Als Katalysator geeignete stickstoffhaltige Verbindungen sind insbesondere Amine wie insbesondere N-Ethyl-diisopropylamin, N,N,N',N'-Tetramethyl-alkylendiamine, Polyoxyalkylenamine, 1,4-Diazabicyclo[2.2.2]octan; Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin oder deren Analoga mit Ethoxy- oder Isopropoxyanstelle der Methoxygruppen am Silicium; cyclische Amidine wie insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Di-o-tolylguanidin, 2-tert-Butyl-1,1,3,3-tetramethylguanidin oder Umsetzungsprodukte aus Carbodiimiden und Aminen wie insbesondere Polyetheraminen oder Aminosilanen; oder Imidazole wie insbesondere N-(3-Trimethoxysilylpropyl)-4,5-dihydroimidazol oder N-(3-Triethoxysilylpropyl)-4,5-dihydroimidazol.

Geeignet sind auch Kombinationen verschiedener Katalysatoren, insbesondere Kombinationen aus mindestens einem Metallkatalysator und mindestens einer stickstoffhaltigen Verbindung.

Als Katalysator bevorzugt sind Organozinn-Verbindungen, Organotitanate, Amine, Amidine, Guanidine oder Imidazole.

Besonders bevorzugt sind Organotitanate oder Guanidine.

Weitere geeignete Bestandteile der bei Raumtemperatur applizierbaren Zusammensetzung sind insbesondere die folgenden Hilfs- und Zusatzmittel:
- Haftvermittler und/oder Vernetzer, insbesondere Silane wie insbesondere Aminosilane, wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin oder deren Analoga mit Ethoxy- oder Isopropoxy- anstelle der Methoxygruppen am Silicium, N-Phenyl-, N-Cyclohexyl- oder N-Alkylaminosilane, weiterhin Mercaptosilane, Epoxysilane, (Meth)acrylosilane, Anhydridosilane, Carbamatosilane, Alkylsilane oder Iminosilane, oder oligomere Formen dieser Silane, oder Addukte aus primären Aminosilanen mit Epoxysilanen oder (Meth)acrylosilanen oder Anhydridsilanen. Insbesondere geeignet sind 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Ureidopropyltrimethoxysilan oder die entsprechenden Silane mit Ethoxysilangruppen anstelle der Methoxysilangruppen, oder oligomere Formen dieser Silane.
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate, Sebacate, Polyole, insbesondere Polyoxyalkylenpolyole oder Polyesterpolyole, Glykolether, Glykolester, organische Phosphor- oder Sulfonsäureester, Polybutene oder von natürlichen Fetten oder Ölen abgeleitete Fettsäuremethyl- oder -ethylester, auch "Biodiesel" genannt;
- Lösemittel;
- anorganische und organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Gimmer, Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Farbstoffe;
- Pigmente, insbesondere Titandioxid oder Eisenoxide;
- Trocknungsmittel, insbesondere Tetraethoxysilan, Vinyltrimethoxy- oder Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, oder Calciumoxid oder Molekularsiebe;
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, pyrogene Kieselsäuren, Celluloseether oder hydrophob modifizierte Polyoxyethylene;
- Stabilisatoren gegen Oxidation, Wärme, Licht oder UV-Strahlung;
- natürliche Harze, Fette oder Öle wie Kolophonium, Schellack, Leinöl, Rizinusöl oder Sojaöl;
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid oder Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- oder Tris(isopropylphenyl)phosphate unterschiedlichen Isopropylierungsgrades, Resorcinolbis(diphenylphosphat), Bisphenol-A-bis(diphenylphosphat) oder Ammoniumpolyphosphate;
- oberflächenaktive Substanzen, insbesondere Netzmittel, Verlaufsmittel, Entlüftungsmittel oder Entschäumer;
- Biozide, insbesondere Algizide, Fungizide oder das Pilzwachstum hemmende Substanzen;
oder weitere üblicherweise in feuchtigkeitshärtenden Zusammensetzungen eingesetzte Substanzen.

Es kann sinnvoll sein, gewisse Bestandteile vor dem Einmischen in die Zusammensetzung chemisch oder physikalisch zu trocknen.

Die bei Raumtemperatur applizierbare Zusammensetzung kann neben dem Polymer mit Endgruppen der Formel (I) weitere Silangruppen-haltige Oligo- oder Polymere enthalten.

Sie ist in einer bevorzugten Ausführungsform frei von Organozinn-Verbindungen. Dies kann aus ökoligischen und/oder toxikoligischen Gründen vorteilhaft sein.

Sie setzt bei ihrer Aushärtung in einer bevorzugten Ausführungsform kein Methanol frei. Dies kann aus toxikologischen Gründen vorteilhaft sein.

Die bei Raumtemperatur applizierbare Zusammensetzung wird vorzugsweise unter Ausschluss von Feuchtigkeit hergestellt und aufbewahrt. Typischerweise ist die Zusammensetzung in einer geeigneten Verpackung oder Anordung, wie insbesondere einem Fass, einem Beutel oder einer Kartusche, unter Ausschluss von Feuchtigkeit lagerstabil.

Die bei Raumtemperatur applizierbare Zusammensetzung kann in Form einer einkomponentigen oder in Form einer zweikomponentigen Zusammensetzung vorliegen.

Als "einkomponentig" wird im vorliegenden Dokument eine Zusammensetzung bezeichnet, bei welcher alle Bestandteile der Zusammensetzung vermischt im gleichen Gebinde gelagert werden und welche mit Feuchtigkeit härtbar ist.

Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet, wobei die Aushärtung erst durch die Einwirkung von Feuchtigkeit abläuft oder vervollständigt wird.

Bei der Applikation der bei Raumtemperatur applizierbaren Zusammensetzung auf mindestens einen Festkörper oder Artikel kommen die vorhandenen Silangruppen und gegebenenfalls vorhandene weitere feuchtigkeitsreaktive Gruppen in Kontakt mit Feuchtigkeit, wodurch die Zusammensetzung aushärtet. Die Aushärtung erfolgt je nach Temperatur, Art des Kontaktes, der Menge der Feuchtigkeit und der Anwesenheit allfälliger Katalysatoren unterschiedlich schnell. Bei einer Aushärtung mittels Luftfeuchtigkeit wird zunächst eine Haut an der Oberfläche der Zusammensetzung gebildet. Die sogenannte Hautbildungszeit stellt ein Mass für die Aushärtungsgeschwindigkeit dar.

Die bei Raumtemperatur applizierbare Zusammensetzung verfügt im ausgehärteten Zustand insbesondere über ausgeprägt elastische Eigenschaften, insbesondere eine hohe Festigkeit und hohe Dehnbarkeit, eine gute Wärmebeständigkeit und gute Haftungseigenschaften auf diversen Substraten. Dadurch eignet sie sich für eine Vielzahl von Verwendungen, insbesondere als Dichtstoff, Klebstoff, Belag, Beschichtung oder Anstrich für Bau- oder Industrieanwendungen, beispielsweise als Fugendichtstoff, Schweiss- oder Bördelnahtdichtstoff, Parkettklebstoff, Montageklebstoff, Scheibenklebstoff, Bodenbelag, Bodenbeschichtung, Balkonbeschichtung, Dachbeschichtung, oder Parkhausbeschichtung.

Für eine Anwendung als Klebstoff oder Dichtstoff weist die bei Raumtemperatur applizierbare Zusammensetzung bevorzugt eine pastöse Konsistenz mit strukturviskosen Eigenschaften auf. Ein solcher pastöser Dichtstoff und/oder Klebstoff wird insbesondere aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikationsroboters, auf ein Substrat aufgetragen.

Geeignete Substrate zum Verkleben oder Abdichten oder Beschichten sind insbesondere
- Glas, Glaskeramik, Siebdruckkeramik, Beton, Mörtel, Backstein, Ziegel, Gips oder Natursteine wie Granit oder Marmor;
- Metalle oder Legierungen, wie Aluminium, Eisen, Stahl oder Buntmetalle, oder oberflächenveredelte Metalle oder Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke, insbesondere Automobildecklacke.

Die Substrate können bei Bedarf vor dem Applizieren der Zusammensetzung vorbehandelt werden, insbesondere durch physikalische und/oder chemische Reinigungsverfahren oder das Aufbringen eines Haftvermittlers, einer Haftvermittlerlösung oder eines Primers.

Verklebt oder abgedichtet werden können zwei gleichartige oder zwei verschiedene Substrate.

Nach dem Verkleben oder Abdichten von zwei Substraten wird ein verklebter oder abgedichteter Artikel erhalten. Ein derartiger Artikel kann ein Bauwerk sein, insbesondere ein Bauwerk des Hoch- oder Tiefbaus, oder ein industrielles Gut oder ein Konsumgut sein, insbesondere ein Fenster, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter, ein Anbauteil davon sein.

Die bei Raumtemperatur applizierbare Zusammensetzung weist eine gute Lagerstabilität und Verarbeitbarkeit auf und vernetzt mit Feuchtigkeit zu einem nichtklebrigen elastischen Material mit guter Wärmebeständigkeit.

Die härtbare Zusammensetzung ist in einer bevorzugten Ausführungsform bei Raumtemperatur applizierbar und stellt insbesondere einen elastischen Klebstoff oder Dichtstoff oder eine elastische Beschichtung dar, insbesondere für die Fugenabdichtung oder für elastische Klebeverbindungen in Bau-oder Industrieanwendungen.

Die härtbare Zusammensetzung ist in einer weiteren bevorzugten Ausführungsform bei Raumtemperatur fest und stellt einen Heissschmelzklebstoff dar. Typischerweise enthält sie ein bei Raumtemperatur festes Polymer mit Endgruppen der Formel (I).

Als weitere Bestandteile für einen Heissschmelzklebstoff geeignet sind insbesondere die folgenden Hilfs- und Zusatzstoffe:
- weitere vernetzungsfähige Polymere, insbesondere Silangruppen- und/oder Isocyanatgruppen aufweisende Polymere;
- nicht-reaktive thermoplastische Polymere, insbesondere Homo- oder Copolymere von ungesättigten Monomeren, insbesondere aus der Gruppe umfassend Ethylen, Propylen, Butylen, Isobutylen, Isopren, Vinylacetat und Alkyl(meth)acrylat, insbesondere Polyethylen (PE), Polypropylen (PP), Polyisobutylen, Ethylenvinylacetat-Copolymere (EVA) oder ataktische Poly-α-Olefine (APAO); weiterhin Polyester, Polyacrylate, Polymethacrylate, Polyacrylamide,Polyacrylonitrile, Polyimide, Polyamide, Polyvinylchloride, Polysiloxane, Polyurethane, Polystyrole, oder Kombinationen davon, insbesondere Polyetheramid Copolymere, Styrol-Butadien-Styrol Copolymere, Styrol-Isopren-Styrol Copolymere, Styrol-Ethylen-Butylen-Styrol Coplymere, Styrol-Ethylen-Propylen-Styrol Coplymere; Butylkautschuk, Polyisobutylen oder Kombinationen davon, Asphalt, Bitumen, Rohkautschuk, fluorierter Kautschuk oder Celluloseharze;
- Klebrigmacherharze, insbesondere Kohlenwasserstoffharze wie insbesondere Cumaron-Inden-Harze, Terpenharze, phenolmodifizierte Terpenharze, natürliche, gegebenenfalls modifizierte, Harze wie insbesondere Kolophonium, Wurzelharz oder Tallölharz, weiterhin α-Methyl-Styrolharze oder polymere Milchsäure;
- Weichmacher, insbesondere Carbonsäureester wie Phthalate oder Adipate, Polyole, organische Phosphor- oder Sulfonsäureester oder Polybutene;
- Katalysatoren für die Vernetzungsreaktionen, insbesondere Metallkatalysatoren und/oder stickstoffhaltige Verbindungen, insbesondere Organozinn-Verbindungen, Organotitanate, Amine, Amidine, Guanidine oder Imidazole;
- Stabilisatoren gegen Oxidation, Wärme, Hydrolyse, Licht oder UV-Strahlung, Biozide, Fungizide oder flammhemmende Substanzen;
- Trocknungsmittel, insbesondere Tetraethoxysilan, Vinyltrimethoxy- oder Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, oder Calciumoxid oder Molekularsiebe;
- Haftvermittler und/oder Vernetzer, insbesondere Silane wie Aminosilane, Mercaptosilane, Epoxysilane, (Meth)acrylosilane, Anhydridosilane, Carbamatosilane, Alkylsilane oder Iminosilane;
- anorganische oder organische Füllstoffe, insbesondere mineralische Füllstoffe, Molekularsiebe, Kieselsäuren inklusive hochdisperse Kieselsäuren aus Pyrolyseprozessen, industriell hergestellte Russe, Graphit, Metall-Pulver PVC-Pulver oder Hohlkugeln;
- Farbstoffe;
oder weitere üblicherweise in reaktiven Heissschmelzklebstoffen eingesetzte Substanzen. Es kann sinnvoll sein, gewisse Bestandteile vor der Zugabe chemisch oder physikalisch zu trocknen.

Der Heissschmelzklebstoff weist bevorzugt einen Gehalt an bei Raumptemperatur festem Polymer mit Endgruppen der Formel (I) im Bereich von 5 bis 100 Gewichts-%, insbesondere 15 bis 95 Gewichts-%, besonders bevorzugt 30 bis 90 Gewichts-%, am meisten bevorzugt 50 bis 80 Gewichts-%, auf.

Der Heissschmelzklebstoff enthält bevorzugt mindestens ein weiteres Polymer ausgewählt aus der Gruppe bestehend aus Isocyanatgruppen aufweisenden thermoplastischen Polymeren, nicht-reaktiven thermoplastischen Polymeren und Klebrigmacherharzen.

Der Heissschmelzklebstoff weist bevorzugt einen Gehalt an Polymeren inklusive dem bei Raumptemperatur festen Polymer mit Endgruppen der Formel (I) im Bereich von 70 bis 100 Gewichts-%, besonders bevorzugt 80 bis 100 Gewichts-%, insbesondere 90 bis 100 Gewichts-%, auf.

Der Heissschmelzklebstoff ist in einer bevorzugten Ausführungsform frei von Organozinn-Verbindungen. Dies kann aus ökologischen und/oder toxikologischen Gründen vorteilhaft sein.

Der Heissschmelzklebstoff ist unter Ausschluss von Feuchtigkeit in einer geeigneten Verpackung oder Anordung lagerstabil.

Bei der Reaktion mit Feuchtigkeit hydrolysieren die Silangruppen, was schliesslich zu einer Vernetzung des Klebstoffes führt. Für den Fall, dass der Heissschmelzklebstoff neben den Silangruppen auch Isocyanatgruppen enthält, reagieren diese ebenfalls mit Feuchtigkeit, was zusätzlich zur Vernetzung des Klebstoffes beiträgt.

Der Heissschmelzklebstoff wird bei seiner Anwendung im flüssigen Zustand auf mindestens ein Substrat appliziert. Dazu wird der Heissschmelzklebstoff vorgängig zumindest soweit erwärmt, dass er flüssig vorliegt. Die Applikation erfolgt typischerweise bei einer Temperatur im Bereich von 80 bis 200 °C, insbesondere 100 bis 180 °C.

Während der Verarbeitung weist der unvernetzte Klebstoff eine gute thermische Beständigkeit auf. Dies zeigt sich darin, dass der Klebstoff während einer für die fachgerechte Applikation ausreichenden Zeit, insbesondere bis zu mehreren Stunden, im flüssigen heissen Zustand belassen werden kann, ohne dass seine Viskosität übermässig ansteigt, insbesondere ohne dass eine Gelierung erfolgt, und ohne dass Geruchsimmissionen auftreten.

Der applizierte Heissschmelzklebstoff wird vorteilhaft mit einem zweiten Substrat zu einer Verklebung gefügt, bevor er durch Abkühlung übermässig erstarrt ist.

Das Erstarren des Klebstoffs durch Abkühlen bewirkt einen sehr schnellen Festigkeitsaufbau und eine hohe Anfangshaftfestigkeit der Verklebung. Zusätzlich zu dieser physikalischen Klebstoffaushärtung erfolgt im Klebstoff auch nach dem Erstarren die Vernetzung über Silangruppen und gegebenenfalls Isocyanatgruppen durch Feuchtigkeit, wie vorgängig beschrieben. Diese chemische Vernetzung führt schliesslich zu einem ausgehärteten vernetzten Klebstoff, welcher durch erneutes Erhitzen auf die Applikationstemperatur nicht wieder aufschmelzbar ist.

Geeignete Substrate, welche mit dem Heissschmelzklebstoff verklebt werden können, sind insbesondere die bereits genannten Substrate. Bevorzugte Substrate sind Kunststoffe, Textilien, Leder, Holz, Holzwerkstoffe, Polymer-Composites, Papier, Metalle, Farben oder Lacke.

Die Substrate können vor dem Applizieren des Klebstoffs vorbehandelt sein, beispielsweise durch eine physikalische und/oder chemische Reinigung oder durch das Aufbringen eines Haftvermittlers, einer Haftvermittlerlösung oder eines Primers.

Verklebt werden können zwei gleichartige Substrate oder zwei verschiedene Substrate. Der Klebstoff wird entweder auf eines der beiden Substrate appliziert und mit dem andern zu einer Verklebung gefügt, oder er kann auf beide zu verklebenden Substrate appliziert werden. Bevorzugt ist das Verkleben von zwei verschiedenen Substraten.

Der Heissschmelzklebstoff kann insbesondere verwendet werden für Bau- und Industrieanwendungen, insbesondere als Kaschierklebstoff, Laminatklebstoff, Verpackungsklebstoff, Textilklebstoff oder Holzklebstoff. Besonders geeignet ist er für Verklebungen, in welchen die Verklebungsstelle sichtbar ist, insbesondere für das Verkleben von Glas, beispielsweise im Fahrzeug- und Fensterbau, sowie für das Verkleben von Klarsichtverpackungen.

Aus der Verwendung des Heissschmelzklebstoffs resultiert ein Artikel. Bevorzugte Artikel sind Automobil-Innenausstattungsteile wie insbesondere Dachhimmel, Sonnenblende, Instrumententafel, Türseitenteil, Hutablage oder dergleichen, Holzfaserwerkstoffe aus dem Duschen- und Badbereich, Möbel-Dekorfolien, Membranfolien mit Textilien wie insbesondere Baumwolle, Polyesterfolien im Bekleidungsbereich, Verbunde aus Textilien und Schäumen für Autoausstattungen, oder Klarsichtverpackungen.

Der beschriebene Heissschmelzklebstoff weist eine Reihe von Vorteilen auf. Er erlaubt eine niedrige Gefahreneinstufung, da er einen geringen oder gar keinen Gehalt an monomeren Diisocyanaten aufweist. Er ist in einer geeigneten Verpackung lagerstabil. Beim Aufheizen auf eine Temperatur im Bereich von 80 bis 200 °C, insbesondere 100 bis 180 °C, weist er eine Viskosität auf, bei der er gut applizierbar ist. Er kann während überraschend langer Zeit im flüssigen heissen Zustand gehalten werden, ohne zu gelieren. Der Klebstoff vernetzt unter dem Einfluss von Feuchtigkeit, bildet dabei keine Blasen und führt zu einem optisch und mechanisch hochwertigen Klebeverbund mit ausgezeichneter Haftung und guter Beständigkeit gegenüber Umwelteinflüssen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet. "NK" steht für "Normklima".

### "TFT" steht für "Hautbindungszeit" (Tack Free Time)

**¹H-NMR-Spektren** wurden in CDCl₃ auf einem Spektrometer des Typs Bruker Ascend 400 bei 400.14 MHz gemessen; die chemischen Verschiebungen δ sind angegeben in ppm relativ zu Tetramethylsilan (TMS), die Kopplungskonstanten J sind angegeben in Hz.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen; die Absorptionsbanden sind in Wellenzahlen (cm⁻¹) angegeben (Messfenster: 4000-650 cm⁻¹).

**Gaschromatogramme** (GC) wurden gemessen im Temperaturbereich von 60 bis 320 °C mit einer Aufheizrate von 15 °C/min und 10 min Verweilzeit bei 320 °C. Die Injektortemperatur betrug 250 °C. Es wurde eine Zebron ZB-5 Säule verwendet (L = 30 m, ID = 0.25 mm, dj = 0.5 µm) bei einem Gasfluss von 1.5 ml/Min. Die Detektion erfolgte mittels Flammenionisation (FID), wobei die Signale via Flächenprozent-Methode ausgewertet wurden.

**Viskositäten** wurden bestimmt auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) bei 20 °C.

### 1. Verwendete Ausgangsmaterialen und Abkürzungen dafür:

- Acclaim® 12200: Polyoxypropylendiol mit niedrigem Ungesättigtheitsgrad, OH-Zahl 11.0 mg KOH/g, Wassergehalt ca. 0.02 Gew.-% (von Bayer)
- IPDI: Isophorondiisocyanat, Vestanat® IPDI (von Evonik Industries)
- DIDP: Diisodecylphthalat
- VTEO: Vinyltriethoxysilan
- VTMO: Vinyltrimethoxysilan
- PCC: gefälltes Calciumcarbonat, Socal® U1 S2 (von Solvay)
- GCC: gemahlenes Calciumcarbonat, Omyacarb® 5 GU (von Omya)
- IBAY: Bis(ethylacetoacetato)diisobutoxy-titan(IV), Tyzor® IBAY (von Dorf Ketal)
- DBU: 1,8-Diazabicyclo[5.4.0]undec-7-en

### NCO-Polymer 1:

Unter Feuchtigkeitsausschluss wurden 720.0 g Acclaim® 12200, 34.5 g IPDI, 80.0 g DIDP und 0.1 g Bismuttris(neodecanoat) (10 Gewichts-% in DIDP) unter stetigem Rühren auf 90 °C aufgeheizt und auf dieser Temperatur belassen, bis der titrimetrisch bestimmte Gehalt an freien Isocyanatgruppen einen stabilen Wert von 0.73 Gewichts-% erreicht hatte. Das isocyanatfunktionelle Polymer wurde auf Raumtemperatur abgekühlt und unter Ausschluss von Feuchtigkeit aufbewahrt. Es war klar und hatte am Folgetag der Herstellung eine Viskosität von 31 Pa·s (20 °C).

### Hydroxysilan 1: 2-Ethoxy-4(5)-(2-triethoxysilylethyl)cyclohexan-1-ol

In einem Rundkolben wurden 150.00 g Ethanol und 0.50 g Vinyltriethoxysilan unter Stickstoffatmosphäre während 15 min bei 50 °C gerührt. Anschliessend wurden 180.00 g (624 mmol) *β-*(3,4-Epoxycyclohexyl)ethyltriethoxysilan (CoatOSil® 1770, von Momentive) und 3.06 g Aluminium(III)isopropoxid zugegeben und unter Stickstoffatmosphäre während 16 h bei 100 °C am Rückfluss gerührt. Dann wurde die trübe Reaktionsmischung auf Raumtemperatur abgekühlt, filtriert und überschüssiges Ethanol bei 80 °C und 10 mbar am Rotationsverdampfer entfernt. Es wurde ein farbloses flüssiges Produkt erhalten.

Das Produkt wies nach der Herstellung eine Reinheit von 92 Gewichts-% auf (bestimmt mittels Gaschromatographie). Nach 3 Monaten Lagerung unter Feuchtigkeitsausschluss bei Raumtemperatur war die Reinheit unverändert. FT-IR: 3444 (O-H), 2973, 2925, 2882, 2735, 1483, 1443, 1389, 1347, 1294, 1263, 1212, 1165, 1100, 1073, 1012, 953, 885, 860, 767, 710, 677.
¹H-NMR: δ 3.81 (m, 6 H, Si-O-C*H*₂-CH₃), 3.68 und 3.56 (2xm, 2x0.5 H, (OH)C^{cycl}*H*), 3.64 und 3.43 (2xm, 2x1 H, C^{cycl}H-O-C*H₂*-CH₃), 3.27 und 3.13 (2xm, 2x0.5 H, C^{cycl}*H*-O-CH₂-CH₃), 2.50 (m, 1 H, C^{cycl}H*)*, 1.80, 1.64 und 1.48 (3xm, 6 H, C^{cycl}H₂), 1,41 (m, 2 H, C^{cycl}H-C*H₂*-CH₂-Si), 1.22 (m, 12 H, Si-O-CH₂-C*H₃*), 0.61 (m, 2 H, C^{cycl}H-CH₂-C*H₂*-Si).
GC: Es wurden vier Peaks bei Retentionszeiten von 12.57 min bis 12.82 min mit insgesamt 92 Flächen-% detektiert, welche den Diastereomeren von 2-Ethoxy-4-(2-triethoxysilylethyl)cyclohexan-1-ol und 2-Ethoxy-5-(2-triethoxysilylethyl)cyclohexan-1-ol zugeordnet und für die Reinheit zusammengezählt wurden.

### Hydroxysilan 2: 2-Methoxy-4(5)-(2-trimethoxysilylethyl)cyclohexan-1-ol

In einem Rundkolben wurden 104.35 g Methanol und 0.39 g Vinyltrimethoxysilan unter Stickstoffatmosphäre während 15 min bei 50 °C gerührt. Dann wurden 153.74 g (624 mmol) *β-*(3,4-Epoxycyclohexyl)ethyltrimethoxysilan (Silquest® A-186, von Momentive) und 3.06 g Aluminium(III)isopropoxid zugegeben und die trübe Mischung in Portionen zu 60 g im Mikrowellenreaktor jeweils während 30 min bei 140 °C und einem Druck von ca. 12 bar zur Reaktion gebracht. Anschliessend wurden die vereinigten trüben Reaktionsmischungen auf Raumtemperatur abgekühlt, filtriert und überschüssiges Methanol bei 80 °C und 10 mbar am Rotationsverdampfer entfernt. Es wurde ein farbloses flüssiges Produkt erhalten.

Das Produkt wies nach der Herstellung eine Reinheit von 91 Gewichts-% auf (bestimmt mittels Gaschromatographie). Nach 3 Monaten Lagerung unter Feuchtigkeitsausschluss bei Raumtemperatur war die Reinheit unverändert. FT-IR: 3456 (O-H), 2924, 2839, 1454, 1411, 1381, 1349, 1292, 1270, 1190, 1157, 1077, 997, 935, 908, 889, 874, 776, 710, 675.
¹H-NMR: δ 3.73 und 3.61 (2xm, 2x0.5 H, (OH)C^{cycl}*H*), 3.57 (d, 9 H, Si-O-C*H₃*), 3.37 (d, 3 H, C^{cycl}H-O-C*H₃*), 3.20 und 3.07 (2xm, 2x0.5 H, C^{cycl}*H*-O-CH₃), 2.60 (m, 1 H, C^{cycl}H*)*, 1.82, 1.72, 1.63 und 1.46 (4xm, 6 H, C^{cycl}H₂), 1.39 (q, 2 H, C^{cycl}H-C*H₂*-CH₂-Si), 0.62 (m, 2 H, C^{cycl}H-CH₂-C*H₂*-Si).
GC: Es wurden zwei Peaks bei Retentionszeiten von 11.57 min bis 11.68 min mit insgesamt 91 Flächen-% detektiert, welche den Diastereomeren von 2-Methoxy-4-(2-trimethoxysilylethyl)cyclohexan-1-ol und 2-Methoxy-5-(2-trimethoxysilylethyl)cyclohexan-1-ol zugeordnet und für die Reinheit zusammengezählt wurden.

### Hydroxysilan 3: Gemisch enthaltend 2-(2-Methoxyethoxy)ethoxy-4(5)-(2-tris(2-(2-methoxyethoxy)ethoxy)silylethyl)cyclohexan-1-ol, 2-(2-Methoxyethoxy)ethoxy-4(5)-(2-ethoxy-bis(2-(2-methoxyethoxy)ethoxy)silylethyl)cyclohexan-1-ol und 2-(2-Methoxyethoxy)ethoxy-4(5)-(2-diethoxy-(2-(2-methoxyethoxy)-ethoxy)silylethyl)cyclohexan-1-ol

In einem Rundkolben wurden 117.04 g Methyldiglykol (2-(2-Methoxyethoxy)-ethanol), 50.00 g (203 mmol) *β-*(3,4-Epoxycyclohexyl)ethyltrimethoxysilan (Silquest® A-186, von Momentive) und 0.50 g Aluminium(III)isopropoxid unter Stickstoffatmosphäre während 1 h bei 120 °C gerührt. Anschliessend wurde bei gleichbleibender Temperatur während 2 h bei 400 mbar, weiteren 2 h bei 300 mbar und weiteren 3 h bei 150 mbar über einen ungekühlten Destillationsaufsatz ein klares Destillat aufgefangen, welches im FT-IR als fast reines Methanol mit Spuren von Methyldiglykol identifiziert wurde. Die Reaktionsmischung wurde während 24 Stunden bei 140 °C und 50 mbar weitergerührt, bis kein Destillat mehr aufgefangen werden konnte. Schliesslich wurde das überschüssige Methyldiglykol bei 120 °C und 0.5 mbar entfernt. Es wurde ein farbloses flüssiges Produkt erhalten.
FT-IR: 3473 (O-H), 2923, 2874, 2820, 1454, 1411, 1354, 1329, 1292, 1248, 1198, 1086, 1028, 958, 847, 770, 715, 681.

### 2. Silangruppen-haltige Polymere:

### Polymer STP-1:

Unter Feuchtigkeitsausschluss wurden 100.00 g NCO-Polymer 1, 0.06 g Bismuttris(neodecanoat) (10 Gewichts-% in DIDP) und 6.72 g **Hydroxysilan 1** unter Stickstoffatmosphäre bei 80 °C gerührt, bis mittels IR-Spektroskopie keine Isocyanatgruppen mehr nachweisbar waren (ca. 2 Stunden). Das Silangruppen-haltige Polymer wurde auf Raumtemperatur abgekühlt und unter Ausschluss von Feuchtigkeit aufbewahrt. Es war klar und hatte am Folgetag der Herstellung eine Viskosität von 116 Pa·s (20 °C).

### Polymer STP-2:

Unter Feuchtigkeitsausschluss wurden 100.00 g NCO-Polymer 1, 0.06 g Bismuttris(neodecanoat) (10 Gewichts-% in DIDP) und 5.58 g **Hydroxysilan 2** unter Stickstoffatmosphäre bei 80 °C gerührt, bis mittels IR-Spektroskopie keine Isocyanatgruppen mehr nachweisbar waren (ca. 2 Stunden). Das Silangruppen-haltige Polymer wurde auf Raumtemperatur abgekühlt und unter Ausschluss von Feuchtigkeit aufbewahrt. Es war klar und hatte am Folgetag der Herstellung eine Viskosität von von 91 Pa·s(20 °C).

### Polymer STP-3:

Unter Feuchtigkeitsausschluss wurden 100.00 g NCO-Polymer 1, 0.06 g Bismuttris(neodecanoat) (10 Gewichts-% in DIDP) und 12.66 g **Hydroxysilan 3** unter Stickstoffatmosphäre bei 80 °C gerührt, bis mittels IR-Spektroskopie keine Isocyanatgruppen mehr nachweisbar waren (ca. 2 Stunden). Das Silangruppen-haltige Polymer wurde auf Raumtemperatur abgekühlt und unter Ausschluss von Feuchtigkeit aufbewahrt. Es war klar und hatte am Folgetag der Herstellung eine Viskosität von 126 Pa·s(20 °C).

Bei den Polymeren **STP-1** bis **STP-3** handelt es sich um erfindungsgemässe Polymere mit Endgruppen der Formel (I).

### 3. Bei Raumtemperatur applizierbare feuchtigkeitshärtende Zusammensetzungen:

### Zusammensetzungen Z1 bis Z6:

Für jede Zusammensetzung wurden die in der Tabelle 1 angegebenen Inhaltsstoffe in den angegebenen Mengen (in Gewichtsteilen) mittels eines Zentrifugalmischers (SpeedMixer™ DAC 150, FlackTek Inc.) unter Feuchtigkeitsausschluss vermischt und aufbewahrt. Jede Zusammensetzung wurde folgendermassen geprüft:
Zur Bestimmung der Lagerstabilität wurde die Viskosität der Zusammensetzung "frisch" (am Folgetag der Herstellung) und "gelagert" (7 Tage in einem geschlossenem Gebinde in einem Umluftofen bei 60 °C) bestimmt.

Zur Bestimmung der **Hautbildungszeit (TFT)** wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben.

Die **Shore A-Härte** wurde bestimmt nach DIN 53505 an während 14 Tagen im Normklima ausgehärteten Prüfkörpern.

Zur Bestimmung der mechanischen Eigenschaften wurde die Zusammensetzung auf einer PTFE-beschichteten Folie zu einem Film von 2 mm Dicke aufgebracht, dieser während 2 Wochen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung** und **E-Modul** (E-Modul bei 0.5-5 % Dehnung) geprüft.

Diese Resultate sind mit dem Zusatz **"NK:"** versehen.

Als Mass für die Wärmebeständigkeit wurden einige Hanteln und der Shore A-Prüfkörper, anschliessend an die 2 Wochen im Normklima zusätzlich während 4 Wochen bei 100 °C in einem Umluftofen gelagert und anschliessend auf dieselbe Weise auf Zugfestigkeit, Bruchdehnung und E-Modul, bzw. auf Shore A-Härte, geprüft. Diese Resultate sind mit dem Zusatz **"100°C:"** versehen.

Die Resultate sind in der Tabelle 1 angegeben.

Die *Verdickerpaste* wurde hergestellt, indem in einem Vakuummischer 300 g Diisodecylphthalat und 48 g 4,4'-Methylendiphenyldiisocyanat (Desmodur® 44 MC L; von Bayer) vorgelegt, leicht aufgewärmt und anschliessend unter starkem Rühren 27 g Monobutylamin langsam zugetropft wurden. Die entstehende Paste wurde unter Vakuum und Kühlung eine Stunde weitergerührt.

**Tabelle 1: Zusammensetzung und Eigenschaften der Zusammensetzungen Z1 bis Z6.**

| **Zusammensetzung** | | **Z1** | **Z2** | **Z3** | **Z4** | **Z5** | **Z6** |
|---|---|---|---|---|---|---|---|
| Silangruppen-haltiges Polymer | | **STP-1,** 20.0 | **STP-1,** 20.0 | **STP-2,** 20.0 | **STP-2,** 20.0 | **STP-3,** 20.0 | **STP-3,** 20.0 |
| DIDP | | 17.6 | 17.6 | 17.6 | 17.6 | 17.6 | 17.6 |
| *Verdickerpaste* | | 5.9 | 5.9 | 5.9 | 5.9 | 5.9 | 5.9 |
| VTEO | | 1.0 | 1.0 | - | - | 1.0 | 1.0 |
| VTMO | | - | - | 1.0 | 1.0 | - | - |
| PCC | | 10.0 | 10.0 | 10.0 | 10.0 | 10.0 | 10.0 |
| GCC | | 50.0 | 50.0 | 50.0 | 50.0 | 50.0 | 50.0 |
| IBAY | | 1.6 | 1.6 | 1.0 | 1.0 | 1.6 | 1.6 |
| DBU | | - | 0.20 | - | 0.20 | - | 0.20 |
| Viskosität [Pa·s] frisch | | 89 | 67 | 71 | 79 | 65 | 55 |
| gelagert (7d 60°C) | | 85 | 64 | 77 | 96 | 59 | 51 |
| TFT [min.] | | >360 | 270 | 65 | 15 | >360 | 180 |
| **NK:** | Shore A | 24 | 15 | 23 | 20 | 11 | 9 |
| Zugfestigkeit [MPa] | | 0.9 | 0.3 | 0.9 | 0.7 | 0.3 | 0.3 |
| Bruchdehnung [%] | | 155 | 107 | 202 | 202 | 73 | 90 |
| E-Modul [MPa] | | 0.9 | 0.4 | 0.5 | 0.5 | 0.5 | 0.4 |
| **100°C:** | Shore A | 20 | 22 | 16 | 16 | 12 | 11 |
| Zugfestigkeit [MPa] | | 0.7 | 0.7 | 0.6 | 0.6 | 0.3 | 0.3 |
| Bruchdehnung [%] | | 140 | 142 | 140 | 158 | 73 | 129 |
| E-Modul [MPa] | | 0.4 | 0.6 | 0.5 | 0.5 | 0.4 | 0.2 |

## Patentansprüche

1. Polymer mit Endgruppen der Formel (I), 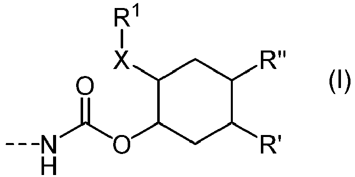 wobei
entweder R' für einen Rest der Formel (II) und R" für einen Wasserstoff-Rest
oder R' für einen Wasserstoff-Rest und R" für einen Rest der Formel (II) stehen; 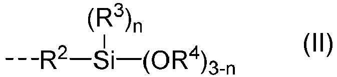
R¹ für einen Kohlenwasserstoff-Rest mit 1 bis 18 C-Atomen, welcher gegebenenfalls Heteroatome in Form von Ether-Sauerstoff, Ester-Sauerstoff, Thioether-Schwefel oder tertiärem Amin-Stickstoff aufweist, steht;
R² für einen linearen oder verzweigten Alkylen- oder Cycloalkylen-Rest mit 1 bis 20 C-Atomen, gegebenenfalls mit aromatischen Anteilen, und gegebenenfalls mit einem oder mehreren Heteroatomen, steht;
R³ für einen Alkyl-Rest mit 1 bis 8 C-Atomen steht;
R⁴ für einen aliphatischen oder cycloaliphatischen oder arylaliphatischen Kohlenwasserstoff-Rest mit 1 bis 12 C-Atomen, welcher gegebenenfalls einen oder zwei Ether-Sauerstoffe aufweist, steht;
X für O oder für S steht; und
n für 0 oder 1 oder 2 steht.

2. Polymer gemäss Anspruch 1, **dadurch gekennzeichnet, dass** R¹ für einen aliphatischen oder cycloaliphatischen oder arylaliphatischen Kohlenwasserstoff-Rest mit 1 bis 12 C-Atomen steht, welcher gegebenenfalls ein oder zwei Ether-Sauerstoffe aufweist.

3. Polymer gemäss einem der Ansprüche 1 oder 2, **dadurch gekennzeichnet, dass** R⁴ für einen Methyl-Rest oder für einen Ethyl-Rest steht.

4. Polymer gemäss einem der vorhergehenden Ansprüche, **dadurch gekennzeichnet, dass** X für O steht.

5. Polymer gemäss einem der vorhergehenden Ansprüche, **dadurch gekennzeichnet, dass** X für O steht und R¹ und R⁴ beide für einen Methyl-Rest oder beide für einen Ethyl-Rest stehen.

6. Polymer gemäss einem der vorhergehenden Ansprüche, **dadurch gekennzeichnet, dass** n für 0 steht.

7. Polymer gemäss einem der vorhergehenden Ansprüche, **dadurch gekennzeichnet, dass** es im Mittel eine Funktionalität im Bereich von 1.3 bis 4 in Bezug auf Endgruppen der Formel (I) aufweist.

8. Polymer gemäss einem der vorhergehenden Ansprüche, **dadurch gekennzeichnet, dass** es ein mittleres Molekulargewicht im Bereich von 1'000 bis 30'000 g/mol aufweist.

9. Polymer gemäss einem der vorhergehenden Ansprüche, **dadurch gekennzeichnet, dass** es ein bei Raumtemperatur flüssiger Silangruppen-haltiger Polyether ist.

10. Polymer gemäss einem der Ansprüche 1 bis 8, **dadurch gekennzeichnet, dass** es ein bei Raumtemperatur fester Polyester und/oder ein bei Raumtemperatur festes Polycarbonat ist.

11. Verfahren zur Herstellung eines Polymers gemäss einem der Ansprüche 1 bis 10, **dadurch gekennzeichnet, dass** mindestens ein Hydroxysilan der Formel (III) 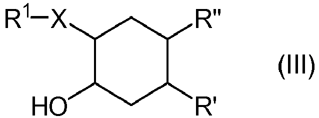 mit mindestens einem Isocyanatgruppen-haltigen Polyurethanpolymer umgesetzt wird.

12. Hydroxysilan der Formel (VII), 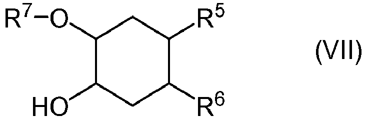 wobei
entweder R⁵ für einen Rest der Formel (VIII) und R⁶ für einen Wasserstoff-Rest
oder R⁵ für einen Wasserstoff-Rest und R⁶ für einen Rest der Formel (VIII) stehen;
----(CH₂)₂-Si-(OR⁸)₃ (VIII)
und R⁷ und R⁸ entweder beide für einen Methyl-Rest oder beide für einen Ethyl-Rest stehen.

13. Härtbare Zusammensetzung umfassend mindestens ein Polymer gemäss einem der Ansprüche 1 bis 10.

14. Härtbare Zusammensetzung gemäss Anspruch 13, **dadurch gekennzeichnet, dass** sie bei Raumtemperatur applizierbar ist und einen elastischen Klebstoff oder Dichtstoff oder eine elastische Beschichtung darstellt.

15. Härtbare Zusammensetzung gemäss Anspruch 13, **dadurch gekennzeichnet, dass** sie bei Raumtemperatur fest ist und einen Heissschmelzklebstoff darstellt.

## Claims

1. A polymer having end groups of the formula (I) 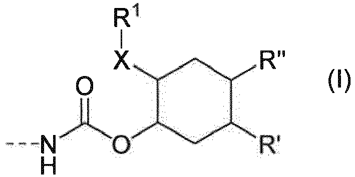 where
either R' is a radical of the formula (II) and R" is a hydrogen radical or R' is a hydrogen radical and R" is a radical of the formula (II); 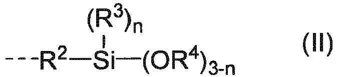
R¹ is a hydrocarbyl radical which has 1 to 18 carbon atoms and optionally has heteroatoms in the form of ether oxygen, ester oxygen, thioether sulfur or tertiary amine nitrogen;
R² is a linear or branched alkylene or cycloalkylene radical having 1 to 20 carbon atoms, optionally having aromatic components, and optionally having one or more heteroatoms;
R³ is an alkyl radical having 1 to 8 carbon atoms;
R⁴ is an aliphatic or cycloaliphatic or arylaliphatic hydrocarbyl radical which has 1 to 12 carbon atoms and optionally has one or two ether oxygens;
X is O or S; and
n is 0 or 1 or 2.

2. A polymer as claimed in claim 1, **characterized in that** R¹ is an aliphatic or cycloaliphatic or arylaliphatic hydrocarbyl radical which has 1 to 12 carbon atoms and optionally has one or two ether oxygens.

3. A polymer as claimed in either of claims 1 and 2, **characterized in that** R⁴ is a methyl radical or an ethyl radical.

4. A polymer as claimed in any of the preceding claims, **characterized in that** X is O.

5. A polymer as claimed in any of the preceding claims, **characterized in that** X is O and R¹ and R⁴ are each a methyl radical or are each an ethyl radical.

6. A polymer as claimed in any of the preceding claims, **characterized in that** n is 0.

7. A polymer as claimed in any of the preceding claims, **characterized in that** it has an average functionality in the range from 1.3 to 4 in relation to end groups of the formula (I).

8. A polymer as claimed in any of the preceding claims, **characterized in that** it has an average molecular weight in the range from 1'000 to 30'000 g/mol.

9. A polymer as claimed in any of the preceding claims, **characterized in that** it is a polyether containing silane groups which is liquid at room temperature.

10. A polymer as claimed in any of claims 1 to 8, **characterized in that** it is a polyester which is solid at room temperature and/or a polycarbonate which is solid at room temperature.

11. A process for preparing a polymer as claimed in any of claims 1 to 10, **characterized in that** at least one hydroxysilane of the formula (III) 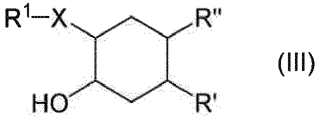 is reacted with at least one polyurethane polymer containing isocyanate groups.

12. A hydroxysilane of the formula (VII) 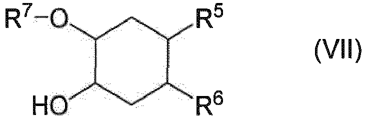 where
either R⁵ is a radical of the formula (VIII) and R⁶ is a hydrogen radical or R⁵ is a hydrogen radical and R⁶ is a radical of the formula (VIII);
----(CH₂)₂-Si-(OR⁸)₃ (VIII)
and R⁷ and R⁸ are either each a methyl radical or each an ethyl radical.

13. A curable composition comprising at least one polymer as claimed in any of claims 1 to 10.

14. The curable composition as claimed in claim 13, **characterized in that** it is applicable at room temperature and is an elastic adhesive or sealant or an elastic coating.

15. The curable composition as claimed in claim 13, **characterized in that** it is solid at room temperature and is a hotmelt adhesive.

## Revendications

1. Polymère contenant des groupes terminaux de formule (I) 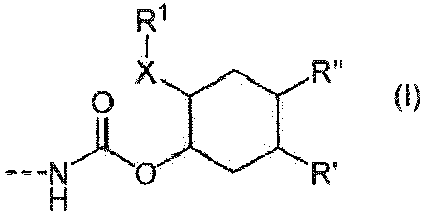 dans laquelle
soit R' représente un radical de formule (II) et R" représente un radical hydrogène,
soit R' représente un radical hydrogène et R" représente un radical de formule (II) ; 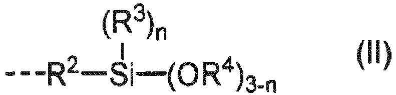
R¹ représente un radical hydrocarboné de 1 à 18 atomes C, qui comprend éventuellement des hétéroatomes sous la forme d'un oxyde d'éther, d'un oxygène d'ester, d'un soufre de thioéther ou d'un azote d'amine tertiaire ;
R² représente un radical alkylène ou cycloalkylène linéaire ou ramifié de 1 à 20 atomes, éventuellement comprenant des fractions aromatiques et éventuellement comprenant un ou plusieurs hétéroatomes ;
R³ représente un radical alkyle de 1 à 8 atomes C ;
R⁴ représente un radical hydrocarboné aliphatique ou cycloaliphatique ou arylaliphatique de 1 à 12 atomes C, qui comprend éventuellement un ou deux oxygènes d'éther ; X représente 0 ou S ; et
n représente 0 ou 1 ou 2.

2. Polymère selon la revendication 1, **caractérisé en ce que** R¹ représente un radical hydrocarboné aliphatique ou cycloaliphatique ou arylaliphatique de 1 à 12 atomes C, qui comprend éventuellement un ou deux oxygènes d'éther.

3. Polymère selon l'une quelconque des revendications 1 ou 2, **caractérisé en ce que** R⁴ représente un radical méthyle ou un radical éthyle.

4. Polymère selon l'une quelconque des revendications précédentes, **caractérisé en ce que** X représente 0.

5. Polymère selon l'une quelconque des revendications précédentes, **caractérisé en ce que** X représente 0, et R¹ et R⁴ représentent tous les deux un radical méthyle ou tous les deux un radical éthyle.

6. Polymère selon l'une quelconque des revendications précédentes, **caractérisé en ce que** n représente 0.

7. Polymère selon l'une quelconque des revendications précédentes, **caractérisé en ce qu'**il présente en moyenne une fonctionnalité dans la plage allant de 1,3 à 4 au regard des groupes terminaux de formule (I).

8. Polymère selon l'une quelconque des revendications précédentes, **caractérisé en ce qu'**il présente un poids moléculaire moyen dans la plage allant de 1 000 à 30 000 g/mol.

9. Polymère selon l'une quelconque des revendications précédentes, **caractérisé en ce qu'**il consiste en un polyéther contenant des groupes silane liquide à température ambiante.

10. Polymère selon l'une quelconque des revendications 1 à 8, **caractérisé en ce qu'**il consiste en un polyester solide à température ambiante et/ou en un polycarbonate solide à température ambiante.

11. Procédé de fabrication d'un polymère selon l'une quelconque des revendications 1 à 10, **caractérisé en ce qu'**au moins un hydroxysilane de formule (III) 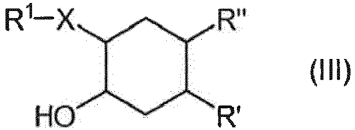 est mis en réaction avec au moins un polymère de polyuréthane contenant des groupes isocyanate.

12. Hydroxysilane de formule (VII) 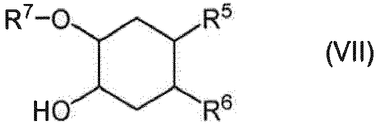 dans laquelle
soit R⁵ représente un radical de formule (VIII) et R⁶ représente un radical hydrogène,
soit R⁵ représente un radical hydrogène et R⁶ représente un radical de formule (VIII) ;
----(CH₂)₂-Si-(OR⁸)₃ (VIII)
et R⁷ et R⁸ représentent soit tous les deux un radical méthyle, soit tous les deux un radical éthyle.

13. Composition durcissable comprenant au moins un polymère selon l'une quelconque des revendications 1 à 10.

14. Composition durcissable selon la revendication 13, **caractérisée en ce qu'**elle est applicable à température ambiante, et consiste en un adhésif ou un agent d'étanchéité élastique ou en un revêtement élastique.

15. Composition durcissable selon la revendication 13, **caractérisée en ce qu'**elle est solide à température ambiante, et consiste en un adhésif thermofusible.
